# EUROPÄISCHE PATENTSCHRIFT

(11) **EP 3 363 718 B1**
(45) Veröffentlichungstag und Bekanntmachung des Hinweises auf die Patenterteilung: **09.06.2021**
(21) Anmeldenummer: 17168669.4
(22) Anmeldetag: 28.04.2017
(51) Int. Cl.: B62D 65/02, B62D 65/06

(54) **VERFAHREN ZUR HERSTELLUNG EINES KRAFTFAHRZEUGES**
METHOD FOR PRODUCING A MOTOR VEHICLE
PROCÉDÉ DE FABRICATION D'UN VÉHICULE AUTOMOBILE

(30) Priorität: 15.02.2017 EP 17156249
(43) Veröffentlichungstag der Anmeldung: 22.08.2018
(73) Patentinhaber: MAGNA STEYR Fahrzeugtechnik AG & Co KG, 8041 Graz (AT)
(72) Erfinder: HARMUSZ, Sabine, 8410 Weitendorf (AT); HOFER, Bernhard, 8053 Graz (AT); PASSEGGER, Wolfgang, 8430 Tillmitsch (AT)
(74) Vertreter: Zangger, Bernd

(56) Entgegenhaltungen:
- EP-A2- 2 463 181
- DE-A1-102010 030 295
- FR-A1- 3 026 079
- JP-A- H0 524 563
- US-A- 4 978 164
- US-B2- 6 726 438

## Beschreibung

### Gebiet der Erfindung

Die vorliegende Erfindung betrifft ein Verfahren zur Herstellung eines Kraftfahrzeuges und ein Verfahren zur Herstellung einer Gruppe von Kraftfahrzeugen.

### Stand der Technik

Es ist bekannt dass Kraftfahrzeuge in verschiedenen Bauweisen hergestellt werden können, beispielsweise mit einer selbsttragenden Karosserie oder einer nicht selbsttragenden Karosserie, die auf einer tragenden Plattform aufgebaut sein kann, die auch als Fahrgestell, Untergestell oder Chassis bezeichnet werden kann.

Ein Kraftfahrzeug kann als sogenannten "Rohbau" eine derartige Plattform aus Metall umfassen und eine Karosserie aus Metall, die auf die Plattform aufgesetzt ist.

Bekannt sind auch verschiedene Antriebe für Kraftfahrzeuge wie Benzinantrieb, Elektroantrieb Hybridantrieb bzw. der Betrieb mit alternativen Kraftstoffen wie Erdgas, Wasserstoff und Alkohol. Diese Antriebe erfordern unterschiedliche Bauräume in der Fahrzeugarchitektur, speziell im Bodenbereich. In diesem Bereich befinden sich üblicherweise die stark unterschiedlichen Energiespeicher der Antriebe. Bei konventionellen Verfahren zur Herstellung von Kraftfahrzeugen entstehen daher viele verschiedene Varianten von Karosserien für Kombinationen verschiedener Antriebe, verschiedener Farben und verschiedener Fahrzeugtypen - wie z.B. Kombi, Limousine usw. - die zum Beispiel in einer Lagerzone nach der Lackierung (sogenannter "Lackpuffer") vorgehalten werden müssen, damit sie rasch zur Herstellung eines gewünschten Gesamtfahrzeuges abrufbar sind.

Die EP 2 463 181 A2 offenbart ein Verfahren zur Herstellung eines Kraftfahrzeugs umfassend die Schritte: Lackieren, insbesondere kathodisches Tauchlackieren, eines Fahrzeuggrundrahmens; Erzeugen eines Fahrgestells durch Anbringen eines Antriebsstrangs, eines Fahrwerks und einer Fahrzeugelektrikeinrichtung an dem lackierten Fahrzeuggrundrahmen; Anbringen von Ausstattungskomponenten, insbesondere für den Fahrzeuginnenraum, an dem Fahrgestell, um ein ausgestattetes Fahrgestell zu bilden; Lackieren, insbesondere Decklackieren, von bereitgestellten Aufbaurohbaumodulen; Erzeugen eines jeweiligen Aufbaumodulzusammenbaus aus jedem Aufbaurohbaumodul durch Anbringen einer zum jeweiligen Aufbaurohbaumodul gehörenden Modulelektrikeinrichtung und/oder zumindest einer Modulausstattungskomponente; und Anbringen, insbesondere Ankleben und/oder Anschrauben, der Aufbaumodulzusammenbauten an dem ausgestatteten Fahrgestell.

Aus der JP H05 24563 A ist ein Montageverfahren für ein Automobil bekannt, das in der Lage ist, eine obere Karosserieschale und eine untere Karosserieschale einfach zu verbinden. In dem Montageverfahren zum Kombinieren einer oberen Karosserieschale, mit einer unteren Karosserieschale, bestehend aus einem Unterbodenteil und einem vorderen Karosserieteil, die getrennt von der unteren Karosserieschale oder integral mit ihr hergestellt sind, nachdem sie jeweils separat montiert wurden, wird ein Aufnahmeteil oder eine Eingriffsnut zur Aufnahme des Randteils eines vorderen Bodens auf einem Seitenschweller der oberen Karosserieschiene gebildet, und die Ausrüstung wird durch jeweiliges Zuführen beider Karosserieschalen zu zugeordneten Ausrüstungslinien durchgeführt. Danach wird der von der Vorderkarosserie getrennte oder in sie integrierte Unterbodenteil relativ in Rückwärtsrichtung der Karosserielängsrichtung gegen die Oberkarosserieschale bewegt, wobei sowohl die rechte als auch die linke Seite des Vorderen Bodens mit Aufnahmeteilen in Eingriff stehen und über diese Aufnahmeteile mit der Oberkarosse verbunden sind.

Die US 6 726 438 B2 offenbart ein Fahrzeugchassis, umfassend einen Strukturrahmen; ein Lenksystem, das in Bezug auf den Strukturrahmen montiert ist; ein Drahtbremssystem, das in Bezug auf den Strukturrahmen montiert ist; ein Energieumwandlungssystem, das in Bezug auf den Strukturrahmen montiert und über Draht steuerbar ist; und mindestens ein vertikales tragendes Element, das in Bezug auf den Strukturrahmen montiert und konfiguriert ist, um eine vertikale Last eines darauf gestapelten zweiten Chassis zu tragen.

Die Erfindung soll die Herstellung eines Kraftfahrzeuges und einer Gruppe solcher Kraftfahrzeuge mit unterschiedlichen Antrieben vereinfachen.

### Zusammenfassung der Erfindung

Es ist eine Aufgabe der Erfindung, ein Verfahren zur Herstellung eines Kraftfahrzeuges und einer Gruppe von Fahrzeugen anzugeben, das eine einfachere und kostengünstigere Produktion von Fahrzeugen in unterschiedlichen Varianten, insbesondere Antriebsvarianten, ermöglicht.

Die Lösung der Aufgabe erfolgt durch ein Verfahren zur Herstellung eines Kraftfahrzeuges, wobei das Kraftfahrzeug als Rohbau eine Plattform aus Metall umfasst und eine Karosserie aus Metall, die auf die Plattform aufgesetzt ist, wobei ein Hauptboden aus Metall getrennt vom übrigen Rohbau hergestellt und tauchlackiert wird und danach an der bereits tauchlackierten Plattform und/oder an der bereits tauchlackierten Karosserie befestigt wird, wobei der Hauptboden nach dem Tauchlackieren und vor der Befestigung des Hauptbodens am übrigen Rohbau gelagert wird.

Erfindungsgemäß wird ein Hauptboden aus Metall, der zur Verwendung für einen bestimmten Antrieb des Kraftfahrzeuges ausgebildet sein kann, getrennt vom übrigen Rohbau, also getrennt von der Plattform und getrennt von der Karosserie, hergestellt und tauchlackiert. Derartige fertig lackierte Hauptböden können dann platzsparend gelagert bzw. vorgehalten werden, zur weiteren Verwendung mit parallel dazu vorbereiteten, bereits tauchlackierten Plattformen und/oder bereits tauchlackierten Karosserien.

Die Erfindung ermöglicht dadurch eine späte Karosserievariantenbildung, die erst in der Montage stattfindet. Durch die Vereinheitlichung des Rohbaus bzw. der Unterbauten, also der Plattformen und/oder der Karosserien, wird der "Lackpuffer" im Produktionsprozeß entlastet, also der Speicher aller Karosserienvarianten und Lackvarianten nach der Lackierung. Die je nach Antrieb spezifischen Hauptböden werden nur tauchlackbeschichtet und danach platzsparend im "Lackpuffer" gestapelt.

Die Bezeichnung "Rohbau" umfasst erfindungsgemäß die Bauteile Plattform, Hauptboden und Karosserie.

Vorzugsweise weist der Hauptboden zum Zeitpunkt der Befestigung am übrigen Rohbau keine Anbauteile auf, ist also ein nicht-ausgestatteter Boden. Insbesondere kann der Hauptboden durch ein einfaches Blechteil gebildet sein.

Erfindungsgemäß wird der Hauptboden nach dem Tauchlackieren und gegebenenfalls nach einem Decklackieren und vor der Befestigung des Hauptbodens am übrigen Rohbau gelagert, zumindest zwischengelagert. Der Hauptboden kann somit fertig lackiert zur weiteren Verwendung bereitgehalten werden.

Bevorzugt wird der, bereits lackierte Hauptboden an der Plattform in Montagerichtung von oben oder von unten befestigt, insbesondere geklebt und/oder verschraubt.

Nach der Befestigung des Hauptbodens an der Plattform, werden vorzugsweise Karosseriemodule zur Bildung der Karosserie an der Plattform befestigt, zum Beispiel Seitenwandmodule, Dachmodule und/oder Heckabschlussmodule. Die tragende Struktur dieser Karosseriemodule ist vorzugsweise aus Metall.

Die Karosseriemodule können zum Zeitpunkt der Befestigung an der Plattform bereits ausgestattet sein, zum Beispiel mit Innenverkleidungen, elektrischen Verkabelungen, Teppichen und/oder Griffen.

In einer anderen Ausführungsform des Verfahrens kann der Hauptboden an der, vorzugsweise im Wesentlichen kompletten, Karosserie in Montagerichtung von unten befestigt, insbesondere geklebt und/oder verschraubt werden.

Die komplette Karosserie kann, nach der Befestigung des Hauptbodens an der Plattform, auf die Plattform aufgesetzt und an dieser befestigt werden.

In einem Verfahren zur Herstellung einer Gruppe von Kraftfahrzeugen, umfassend zumindest ein erstes Kraftfahrzeug und ein zweites Kraftfahrzeug, kann das erste und das zweite Kraftfahrzeug wie oben beschrieben hergestellt werden, wobei gleiche Hauptböden an unterschiedlichen Plattformen und/oder an unterschiedlichen Karosserien des ersten und zweiten Kraftfahrzeuges befestigt werden. Es ist daher durch das erfindungsgemäße Herstellungsverfahren möglich, für unterschiedliche Karosserien und/oder Plattformen, beispielsweise zur Bildung von Fahrzeugen unterschiedlichen Typs oder unterschiedlicher Farbe, gleichartige Hauptböden zu verwenden. Daher müssen auch weniger verschiedenartige Hauptböden vorgehalten werden.

Für das erste und das zweite Kraftfahrzeug können auch unterschiedliche Hauptböden an ansonsten gleichen Plattformen und/oder an gleichen Karosserien des ersten und zweiten Kraftfahrzeuges befestigt werden, um geeignete Böden für verschiedene Antriebssysteme darstellen zu können, dabei jedoch immer auf dieselben Karosserien und/oder Plattformen zugreifen zu können, wodurch wieder die Lagerhaltung vereinfacht wird.

### Kurzbeschreibung der Zeichnungen

Die Erfindung wird im Folgenden beispielhaft unter Bezugnahme auf die Zeichnungen beschrieben.
- Fig. 1: ist eine Darstellung zweier Ausführungsformen eines erfindungsgemäßen Verfahrens.
- Fig. 2: ist eine Darstellung einer ersten Ausführungsform eines erfindungsgemäßen Verfahrens.
- Fig. 3: ist eine Darstellung einer zweiten Ausführungsform eines erfindungsgemäßen Verfahrens.
- Fig. 4: ist eine Darstellung einer ersten Ausführungsform eines Hauptbodens und einer Plattform für ein erfindungsgemäßes Verfahren.
- Fig. 5: ist eine Darstellung einer zweiten Ausführungsform eines Hauptbodens und einer Plattform für ein erfindungsgemäßes Verfahren.
- Fig. 6: ist eine schematische Schnittdarstellung einer ersten Befestigungsvariante eines Hauptbodens an einer Plattform.
- Fig. 7: ist eine schematische Schnittdarstellung einer zweiten Befestigungsvariante eines Hauptbodens an einer Plattform.

### Detaillierte Beschreibung der Erfindung

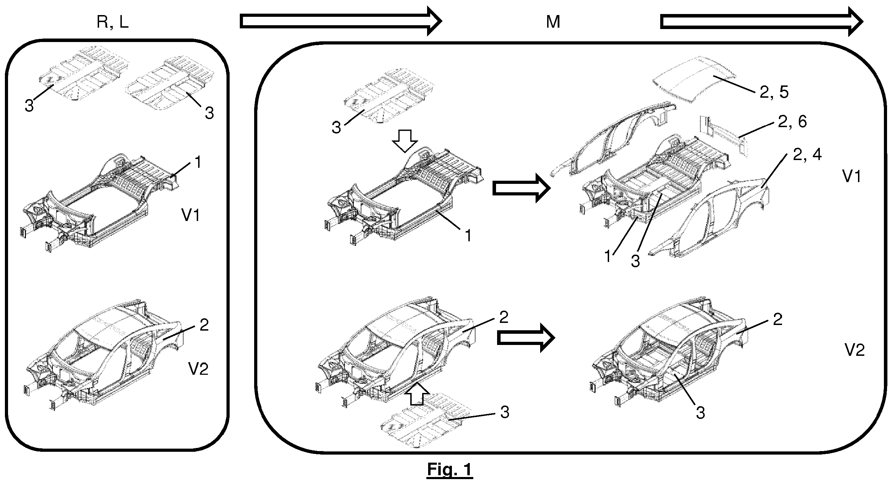

In den Fig. 1-7 ist ein erfindungsgemäßes Verfahren zur Herstellung eines Kraftfahrzeuges, insbesondere der Herstellung einer Vielzahl von Kraftfahrzeugen in einer Produktionsanlage, in zwei Haupt-Ausführungsformen, Variante 1 und Variante 2, dargestellt. Mit diesen Herstellungsverfahren ist es möglich einheitliche Plattformen und/oder Karosserien in der Montage mit einem antriebsspezifischen Hauptboden zu vervollständigen.

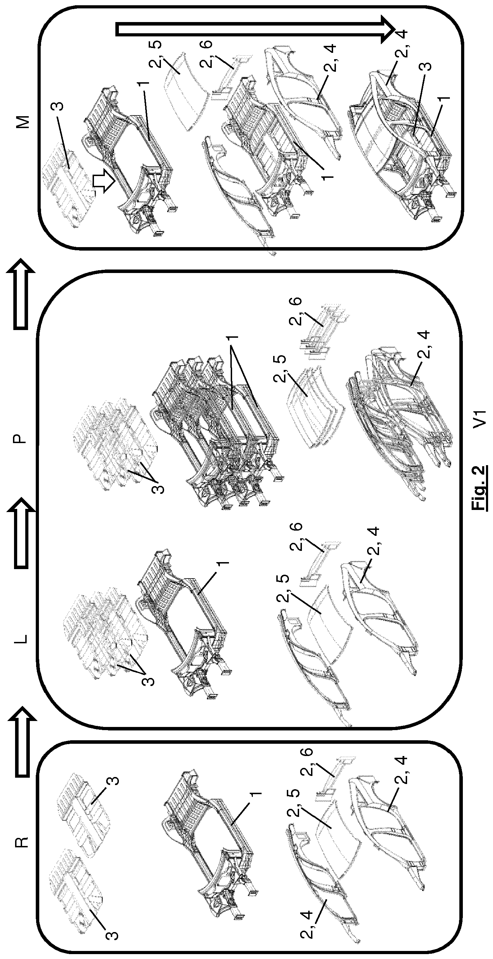

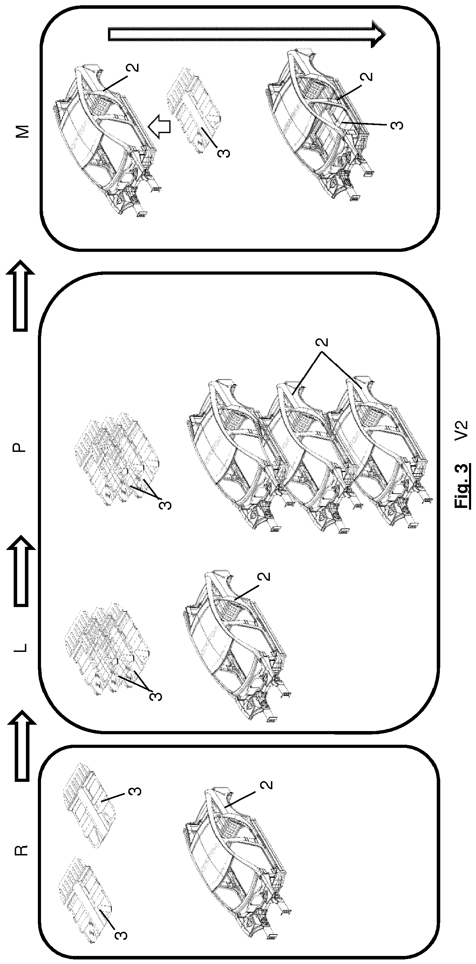

Fig. 1 ist eine Darstellung beider Haupt-Ausführungsformen des erfindungsgemäßen Verfahrens, nämlich Variante 1, V1, oben und Variante 2, V2, unten im Bild. Die Variante V1 ist in der Fig. 2 genauer dargestellt, die Variante V2 in der Figur Fig. 3.

In der Variante V1 - siehe z.B. Fig. 2 - werden Standard-Plattformen 1 in der Rohbau-Fertigung R hergestellt, parallel dazu werden antriebsspezifische Hauptböden 3 und modellspezifische Karosseriemodule 4, 5, 6, einer Karosserie 2, zum Beispiel Seitenwände 4, Dach 5 und Heckabschluß 6 hergestellt.

Anschließend kommen diese Baugruppen in die Lackierung L und werden tauchlackiert und bevorzugt die modellspezifischen Karosserieaufbau-Baugruppen, also Karosseriemodule 4, 5, 6, zusätzlich in einer gewünschten Wagenfarbe decklackiert. Es ist auch möglich, dass nur die tragende Struktur zumindest eines dieser modellspezifischen Karosseriemodule 4, 5, 6 aus Metall besteht und diese vorzugsweise nur tauchlackiert wird, während die daran befestigten weitern Außenverkleidungs- bzw. Sichtteile, das heißt Teile der Ausstattung der modellspezifischen Karosseriemodule, wie beispielsweise Verkleidungen, Blenden, Abdeckungen, Beplankungen etc, decklackiert werden. Sind diese nicht aus Metall, wie beispielsweise aus Kunststoff, kann die Tauchlackierung entfallen.

In einem "Lackpuffer" P, beispielsweise einem Karosserienhaus zur Lagerung von Karosserien 2 und Karosseriemodulen, werden alle Baugruppen, nämlich Hauptböden 3, Plattformen 1 und Karosserien 2 bzw. deren Module 4, 5, 6, abrufbereit gespeichert.

Die Baugruppen können platzsparend gestapelt werden. Besonders von den Standard-Plattformen 1 brauchen nur wenige gespeichert werden. Auch die modellspezifischen Karosserieaufbau-Baugruppen 4, 5, 6 benötigen wenig Raum, da sie bevorzugt noch nicht zu großvolumigen Karosserien verschweißt sind. So lassen sich viele Farbvarianten auf einfache Weise umsetzen. Nach Abruf der modell- und antriebsspezifischen Baugruppen wird zuerst die antriebsspezifische Bodengruppe, also der Hauptboden 3, an die Standard-Plattform 1 von oben oder von unten gefügt. Danach wird die nun antriebsspezifische Plattform 1 inkl. deren Hauptboden 3 mit Elektrik, Fahrwerk, Antrieb und sonstiger Ausstattung ausgestattet. Parallel dazu werden die modellspezifischen Karosserieaufbau-Baugruppen, also Karosseriemodule 4, 5, 6, ausgestattet, wenn dies nicht bereits zuvor geschehen ist.

In einer Montagestation M, insbesondere "Framingstation", werden diese Baugruppen 1, 2, 3 zu einem Gesamtfahrzeug gefügt. Damit findet eine sehr späte Variantenbildung des Fahrzeugmodells statt. Vorteilhafterweise kann somit eine kurze Hauptlinie für die Montage und die Verlagerung der Fertigungsinhalte in die Vormontagelinien mit optimaler Zugängigkeit, erzielt werden und somit Vorteile in der Fertigungszeit.

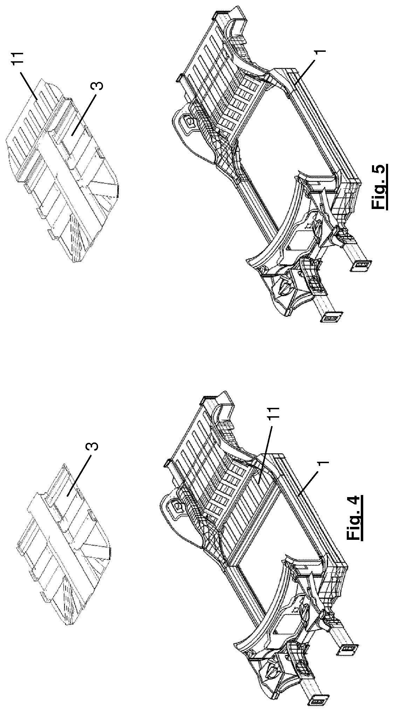

Die antriebsspezifische Bodengruppe, also der Hauptboden 3, der an verschiedene Antriebsformen wie Verbrennungsmotor, Elektromotor, Hybridantrieb usw. angepasst ist, kann auch in zusätzlicher Hinsicht unterschiedlich konfiguriert sein, wie in Fig. 4 und Fig. 5 (obere Abbildungen) dargestellt. Der Hauptboden 3 kann beispielsweise entweder den Bereich einer Hintersitzanlage 11 umfassen (Fig. 5) oder nicht umfassen (Fig. 4). Die Plattform 1 kann ebenfalls entsprechend zur Aufnahme eines Hauptbodens mit oder ohne Hintersitzanlage 11 vorbereitet sein und daher insbesondere selbst ohne oder mit Hintersitzanlage 11 ausgestattet sein (untere Abbildungen in Fig. 4 und Fig. 5). Vorteilhaft bei inkludiertem Hintersitzanlagenbereich im Hauptboden 3 ist, dass die Sitzgeometrie, das heißt die Sitzhöhe, Abstand vorne zu hinten aller Insassen, Position in Fahrzeuglängsrichtung und Querrichtung, und die Energiespeichergeometrie in einer einzigen Baugruppe, nämlich dem Hauptboden 3, mit geringen Toleranzen angepasst werden kann.

Standard-Plattformen 1 und (antriebs-)spezifische Hauptböden 3, zum Beispiel einfache Bodenbleche, werden vorzugsweise parallel und separat tauchlackiert. Weiters werden Baugruppen des Karosserieaufbaus 2, wie z.B. Seitenwandmodule 4, Dachmodule 5, Heckabschlussmodule 6 ebenfalls lackiert, jedenfalls decklackiert, bei Metallteilen zuvor bevorzugt auch tauchlackiert.

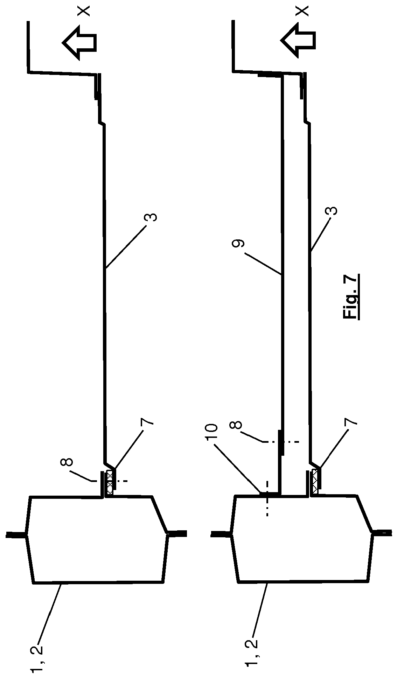

In der eigentlichen Fahrzeug-Montage M wird die für das jeweilige Fahrzeugmodel passende (antriebs-)spezifische Bodengruppe 3 in Montagerichtung X von unten in die Standard-Plattform 1 eingebaut - siehe Fig. 7 -, vorzugsweise befestigt durch Kleben mittels Klebstoff 7 und optional zusätzlich mittels Verschraubungen 8. Alternativ wäre auch eine Montage des Hauptbodens 3 von oben in die Plattform 1 möglich.

Als Alternative können die Karosserieaufbau-Baugruppen 4, 5, 6 vor deren Montage auf die Standard-Plattform 1 bereits ausgestattet sein und beispielsweise Innenverkleidung, elektrische Verkabelungen, Teppich, Griffe usw. enthalten. Diese Variante führt für gewöhnlich zu einer noch späteren Variantenbildung des Produktionsprozesses, da der (Karosserie)Aufbau erst spät in der Fahrzeug-Montage gefügt wird - das heißt die Variantenbildung Kombi, Limousine, Schrägheck usw. wird erst spät im Produktionsprozess gebildet.

In der Variante 2, V2, der Erfindung - siehe v.a. Fig. 3 - werden in einer Rohbaufertigung R Standard-Karosserien 2 eines Fahrzeugmodells ohne Bodengruppe, also ohne Hauptboden 3, gefertigt. Die Hauptböden 3 werden parallel als antriebsspezifische Baugruppe hergestellt.

Im Anschluss werden die Standard-Karosserien 2 und die antriebspezifischen Hauptböden 3 in einer Lackierung L tauchlackiert und die Karosserie 2 auch decklackiert.

Im "Lackpuffer" P werden die Karosserien 2 in verschiedenen Farben gespeichert. Auch die Bodengruppen 3 werden dort platzsparend gespeichert.

Nach Abruf aus dem Speicher wird die Standard-Karosserie 2 in der Montage M mit der antriebsspezifischen Bodengruppe Hauptboden 3 ausgestattet, wobei der Hauptboden 3 bevorzugt in Montagerichtung X von unten gefügt wird (siehe Fig. 7), und durchläuft danach den herkömmlichen weiteren Montageprozess.

Durch die Vereinheitlichung der Karosserie 2 kann in der Lagerzone "Lackpuffer" P sehr viel Platz eingespart werden, da nur die verschiedenen Farben vorgehalten werden müssen und nicht alle antriebspezifischen verschiedenen Karosserien jeweils in allen Farben. Diese Produktionsweise kann auch parallel zu einer herkömmlichen Produktionsweise umgesetzt werden und im Mischbetrieb stattfinden. Es wird dadurch die Möglichkeit geschaffen auf einfache Weise zusätzliche Varianten eines Fahrzeuges herzustellen.

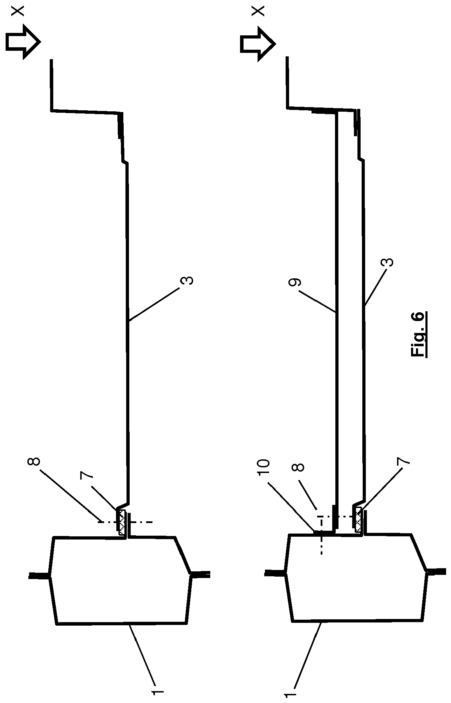

Wie in den Fig. 6 und 7 dargestellt, ist als Verbindungstechnik in der Montagelinie M für beide Varianten, V1 und V2, ein Montageklebstoff 7 vorgesehen und eine zusätzliche Verschraubung 8 bevorzugt, die dazu beiträgt, dass die Verklebung 7 für die Aushärtung fixiert wird und die Steifigkeit und Festigkeit der Karosserie erhöht wird.

Die Fig. 6 und 7 zeigen jeweils X-Schnitte eines hergestellten Fahrzeuges und zwar jeweils im Bereich eines Sitzquerträgers 9 (unten) und außerhalb eines solchen Sitzquerträgers 9 (oben). Die Montagerichtung X ist jeweils durch einen Pfeil dargestellt, und verläuft in Fig. 6 von oben und in Fig. 7 von unten.

Um Blockstellen und damit Kollisionen beim Fügen zu vermeiden, können diese mit Montageteilen wie Befestigungswinkeln 10 nach dem Fügen überbrückt werden. Zum Beispiel können Sitzquerträger 9 mit einem Schweller der Plattform 1 mittels Konsolen, insbesondere mittels Befestigungswinkeln 10, verbunden werden, um einen durchgängigen Lastpfad herzustellen.

Standard Karosserien 2 werden tauchlackiert (kathodische Tauchlackierung, KTL) und decklackiert (entsprechend den gewünschten Fahrzeugfarben) und vorrätig gehalten (siehe Fig. 3, mittleres Bild, P). (Antriebs)spezifische Bodengruppen, d.h. Hauptböden 3, die zwar nicht ausgestattet sind, sich aber dadurch unterscheiden, dass sie entsprechend den einzelnen unterschiedlichen Fahrzeugvarianten unterschiedlich ausgestaltet sind, werden vorzugsweise parallel/ separat tauchlackiert und vorrätig gehalten (siehe Fig. 3, mittleres Bild). Da hierdurch (nur) die Standard-Karosserie 2 als Einheits-Karosserie in den verschiedenen Farben gespeichert werden muss und nicht eine Vielzahl von Karosserien-Varianten, wie es im Stand der Technik üblich ist, ergibt sich für dieses Verfahren der Vorteil einer Verkleinerung des Karosserien-Lagerhauses.

In der eigentlichen Fahrzeug-Montage M wird der für das jeweilig Fahrzeugmodel passende spezifische Hauptboden 3 bevorzugt von unten in die Standard Karosserie 2 eingebaut, vorzugsweise befestigt durch Kleben mittels Klebstoff 7 (siehe Fig. 7). Der Hauptboden kann anschließend weiter ausgestattet werden.

Diese Lösung kann auch bei einer herkömmlichen Montagelinie zur Anwendung kommen bzw. die bestehende Montagelinie unverändert gelassen werden, da der wesentliche Unterschied/Vorteil bei der Bevorratung von Karosserien bzw. bei der Reduktion der Variantenvielfalt der Karosserien selbst liegt.

### Bezugszeichenliste

- 1: Plattform
- 2: Karosserie
- 3: Hauptboden
- 4: Seitenwandmodul
- 5: Dachmodul
- 6: Heckabschlussmodul
- 7: Klebstoff
- 8: Verschraubung
- 9: Sitzquerträger
- 10: Befestigungswinkel
- 11: Hintersitzanlage

- V1: Variante 1
- V2: Variante 2
- R: Rohbaufertigung
- L: Lackierung
- P: Lackpuffer
- M: Montage

## Patentansprüche

1. Verfahren zur Herstellung eines Kraftfahrzeuges, wobei das Kraftfahrzeug als Rohbau eine Plattform (1), also ein Fahrgestell, aus Metall umfasst und eine Karosserie (2) aus Metall, die auf die Plattform (1) aufgesetzt ist,
**dadurch gekennzeichnet, dass** ein Hauptboden (3) aus Metall getrennt vom übrigen Rohbau (1, 2), also getrennt von der Plattform (1) und getrennt von der Karosserie (2), hergestellt und tauchlackiert wird und danach an der bereits tauchlackierten Plattform (1) und/oder an der bereits tauchlackierten Karosserie (2) befestigt wird, wobei der Hauptboden (3) nach dem Tauchlackieren und vor der Befestigung des Hauptbodens (3) am übrigen Rohbau (1, 2) gelagert wird.

2. Verfahren nach Anspruch 1,
**dadurch gekennzeichnet, dass** der Hauptboden (3) zum Zeitpunkt der Befestigung am übrigen Rohbau (1, 2) keine Anbauteile aufweist, also nicht ausgestattet ist.

3. Verfahren nach zumindest einem der vorhergehenden Ansprüche, **dadurch gekennzeichnet, dass** die Plattform (1) und/oder die Karosserie (2) nach dem Tauchlackieren und vor der Befestigung des Hauptbodens (3) am übrigen Rohbau (1, 2) gelagert wird.

4. Verfahren nach zumindest einem der vorhergehenden Ansprüche,
**dadurch gekennzeichnet, dass** der Hauptboden (3) an der Plattform (1) in Montagerichtung von oben befestigt wird.

5. Verfahren nach Anspruch 4,
**dadurch gekennzeichnet , dass**, nach der Befestigung des Hauptbodens (3) an der Plattform (1), Karosseriemodule (4, 5, 6) zur Bildung der Karosserie (2) an der Plattform (1) befestigt werden.

6. Verfahren nach Anspruch 5,
**dadurch gekennzeichnet, dass** die Karosserienmodule (4, 5, 6) zum Zeitpunkt der Befestigung an der Plattform (1) bereits ausgestattet sind.

7. Verfahren nach zumindest einem der Ansprüche 1 bis 3,
**dadurch gekennzeichnet, dass** der Hauptboden (3) an der Karosserie (2) in Montagerichtung von unten befestigt wird.

8. Verfahren nach Anspruch 7,
**dadurch gekennzeichnet, dass** die Karosserie (2) nach der Befestigung des Hauptbodens (3) auf die Plattform (1) aufgesetzt wird.

9. Verfahren zur Herstellung einer Gruppe von Kraftfahrzeugen, umfassend zumindest ein erstes Kraftfahrzeug und ein zweites Kraftfahrzeug, wobei das erste und das zweite Kraftfahrzeug nach einem der vorhergehenden Ansprüche hergestellt werden, wobei gleiche Hauptböden (3) an unterschiedlichen Plattformen (1) oder an unterschiedlichen Karosserien (2) des ersten und zweiten Kraftfahrzeuges befestigt werden.

10. Verfahren zur Herstellung einer Gruppe von Kraftfahrzeugen, umfassend zumindest ein erstes Kraftfahrzeug und ein zweites Kraftfahrzeug, wobei das erste und das zweite Kraftfahrzeug nach einem der vorhergehenden Ansprüche hergestellt werden, wobei unterschiedliche Hauptböden (3) an gleichen Plattformen (1) oder an gleichen Karosserien (2) des ersten und zweiten Kraftfahrzeuges befestigt werden.

## Claims

1. Method for producing a motor vehicle, the motor vehicle comprising, as a shell, a platform (1), that is to say a chassis, made from metal and a vehicle body (2) made from metal which is placed onto the platform (1),
**characterized in that** a main floor (3) made from metal is produced and dip painted separately from the remaining shell (1, 2), that is to say separately from the platform (1) and separately from the vehicle body (2), and is subsequently fastened to the platform (1) which has already been dip painted and/or to the vehicle body (2) which has already been dip painted, the main floor (3) being stored after the dip painting and before the fastening of the main floor (3) to the remaining shell (1, 2).

2. Method according to Claim 1,
**characterized in that** the main floor (3) does not have any attachment parts, that is to say is not fitted out, at the time of the fastening to the remaining shell (1, 2).

3. Method according to at least one of the preceding claims,
**characterized in that** the platform (1) and/or the vehicle body (2) are/is stored after the dip painting and before the fastening of the main floor (3) to the remaining shell (1, 2).

4. Method according to at least one of the preceding claims,
**characterized in that** the main floor (3) is fastened to the platform (1) in the mounting direction from above.

5. Method according to Claim 4,
**characterized in that** vehicle body modules (4, 5, 6) for forming the vehicle body (2) are fastened to the platform (1) after the fastening of the main floor (3) to the platform (1).

6. Method according to Claim 5,
**characterized in that** the vehicle body modules (4, 5, 6) are already fitted out at the time of the fastening to the platform (1).

7. Method according to at least one of Claims 1 to 3,
**characterized in that** the main floor (3) is fastened to the vehicle body (2) in the mounting direction from below.

8. Method according to Claim 7,
**characterized in that** the vehicle body (2) is placed onto the platform (1) after the fastening of the main floor (3).

9. Method for producing a group of vehicles, comprising at least one first motor vehicle and one second motor vehicle, the first and the second motor vehicle being produced according to one of the preceding claims, identical main floors (3) being fastened to different platforms (1) or to different vehicle bodies (2) of the first and second motor vehicle.

10. Method for producing a group of vehicles, comprising at least one first motor vehicle and one second motor vehicle, the first and the second motor vehicle being produced according to one of the preceding claims, different main floors (3) being fastened to identical platforms (1) or to identical vehicle bodies (2) of the first and second motor vehicle.

## Revendications

1. Procédé de fabrication d'un véhicule automobile, le véhicule automobile comportant comme caisse brute une plate-forme (1), c'est-à-dire un châssis, en métal et une carrosserie (2) en métal, qui est placée sur la plate-forme (1),
**caractérisé en ce qu'**un plancher principal (3) en métal est fabriqué et peint par immersion séparément du reste de la caisse brute (1, 2), c'est-à-dire séparément de la plate-forme (1) et séparément de la carrosserie (2), et est ensuite fixé à la plate-forme (1) déjà peinte par immersion et/ou à la carrosserie (2) déjà peinte par immersion, le plancher principal (3) étant stocké après la peinture par immersion et avant la fixation du plancher principal (3) au reste de la caisse brute (1, 2).

2. Procédé selon la revendication 1,
**caractérisé en ce qu'**à l'instant de la fixation au reste de la caisse brute (1, 2), le plancher principal (3) ne comprend aucune pièce rapportée, c'est-à-dire n'est pas équipé.

3. Procédé selon au moins l'une des revendications précédentes,
**caractérisé en ce que** la plate-forme (1) et/ou la carrosserie (2) sont stockées après la peinture par immersion et avant la fixation du plancher principal (3) au reste de la caisse brute (1, 2).

4. Procédé selon au moins l'une des revendications précédentes,
**caractérisé en ce que** le plancher principal (3) est fixé à la plate-forme (1) par le haut dans la direction de montage.

5. Procédé selon la revendication 4,
**caractérisé en ce qu'**après la fixation du plancher principal (3) à la plate-forme (1), des modules de carrosserie (4, 5, 6) sont fixés à la plate-forme (1) pour la formation de la carrosserie (2).

6. Procédé selon la revendication 5,
**caractérisé en ce que** les modules de carrosserie (4, 5, 6) sont déjà équipés à l'instant de la fixation à la plate-forme (1).

7. Procédé selon au moins l'une des revendications 1 à 3,
**caractérisé en ce que** le plancher principal (3) est fixé à la carrosserie (2) par le bas dans la direction de montage.

8. Procédé selon la revendication 7,
**caractérisé en ce que** la carrosserie (2) est placée sur la plate-forme (1) après la fixation du plancher principal (3).

9. Procédé de fabrication d'un groupe de véhicules automobile, comportant au moins un premier véhicule automobile et un deuxième véhicule automobile, le premier et le deuxième véhicule automobile étant fabriqués suivant l'une des revendications précédentes, des planchers principaux (3) identiques étant fixés à différentes plates-formes (1) ou à différentes carrosseries (2) du premier et du deuxième véhicule automobile.

10. Procédé de fabrication d'un groupe de véhicules automobile, comportant au moins un premier véhicule automobile et un deuxième véhicule automobile, le premier et le deuxième véhicule automobile étant fabriqués suivant l'une des revendications précédentes, des planchers principaux (3) différents étant fixés à des plates-formes (1) identiques ou à des carrosseries (2) identiques du premier et du deuxième véhicule automobile.
